(19)

Europäisches
Patentamt

European
Patent Office

Office européen
des brevets

(11)  **EP 2 701 386 A1**

(12)  **EUROPEAN PATENT APPLICATION**

(43) Date of publication:
**26.02.2014 Bulletin 2014/09**

(21) Application number: **12182160.7**

(22) Date of filing: **29.08.2012**

(51) Int Cl.:
*H04N 7/26* (0000.00)          *H04N 7/46* (0000.00)
*H04N 7/68* (2006.01)          *H04N 21/4402* (2011.01)
*H04N 7/01* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.08.2012 US 201213590504**

(71) Applicant: **MediaTek, Inc
Hsin-Chu 300 (TW)**

(72) Inventors:
• **Chen, Wei-Jen
  Jiaoxi Township
  262 Yilan County (TW)**

• **Chuang, Hung-Chang
  300 Hsinchu City (TW)**
• **Wu, Chungyi
  Rende Dist.
  Tainan City (TW)**
• **Lee, Chia-Da
  South Dist.
  702 Tainan City (TW)**
• **Lin, Tai-Ching
  300 Hsinchu City (TW)**

(74) Representative: **2K Patentanwälte Blasberg
Kewitz & Reichel
Partnerschaft
Schumannstrasse 27
60325 Frankfurt am Main (DE)**

(54)  **Video processing apparatus and method**

(57)    The invention provides a video processing apparatus. In one embodiment, the video processing apparatus includes a decoder, a detector, and a motion estimation and motion compensation (MEMC) module. The decoder decodes video data to generate a series of video frames with time stamps. The detector detects discontinuity of the video frames to generate discontinuity information. The MEMC module selects a previous frame prior to the discontinuity and a subsequent frame after the discontinuity from the video frames according to the discontinuity information, performs a motion estimation process to determine at least one motion, performs a motion compensation process according to the motion vector to synthesize an interpolated frame from the previous frame and the subsequent frame, and inserts the interpolated frame into the video frames to obtain a series of compensated frames.

FIG. 2

EP 2 701 386 A1

**Description**

**BACKGROUND OF THE INVENTION**

**Field of the Invention**

The invention relates to video processing, and more particularly to motion estimation and motion compensation.

**Description of the Related Art**

Video data comprises a series of frames. Because each frame is a picture containing a plurality of color pixels, the amount of video data is large. To facilitate storing or transmitting, video data is usually compressed according to a video compression standard to reduce its size. The video data is therefore stored or transmitted in a compressed format. Examples of the video compression standard comprise MPEG-1 for video CD, H.262/MPEG-2 for DVD video, H.263 for video conferencing, and H.264/MPEG-4 for Blu-ray disk and HD DVD. Before the compressed video data is displayed, the compressed video data must be decoded to recover the series of video frames. When the compressed video data is decoded, if decoding errors occur, some of the frames will not be recovered from the compressed data due to decoding error and will therefore be dropped; which is referred to as "dropped frames".

The dropped frames lead to discontinuity of a series of frames. To remove discontinuity from the frames, a video processor may generate reproduced frames to fill in for the vacancies of the dropped frames. An ordinary video processor may simply duplicate video frame prior to the dropped frame to generate the reproduced frame. The reproduced frame is then inserted to the vacancy position of the dropped frame between the frames. The series of frames comprising the reproduced frames are then displayed according to the time stamps thereof. Because reproduced frame is a duplicate of a prior frame, when the frames are displayed, the motion of images corresponding to the reproduced frames on a screen will seem to be suspended; which is referred to as a "judder artifact problem".

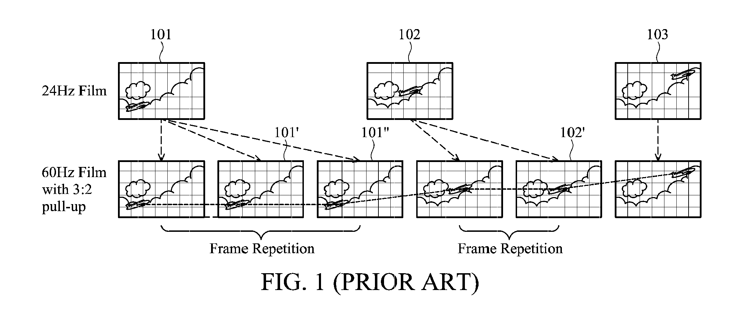

Referring to Fig. 1, a schematic diagram of an example of frame repetition is shown. A segment of a 24Hz film comprises three frames 101, 102, and 103. To increase a frame rate of the film from 24Hz to 60 Hz, two reproduced frames 101' and 101" are generated by duplicating the frame 101 and a reproduced frame 102' is generated by duplicating the frame 102. The reproduced frames 101' and 101" are then inserted between the frames 101 and 102, and the reproduced frame 102' is inserted between the frames 102 and 103. The frames 101, 101', 101", 102, 102', and 103 are displayed in sequence. When the frames 101, 101', 101" are displayed, because the three frames 101, 101', and 101" are identical, the motion of the airplane in the frames 101, 101', and 101" seems to be suspended, and the airplane is then suddenly moved to the location in the frame 102; which is referred to as the "judder artifact problem". Similarly, when the frames 102 and 102' are displayed, the motion of the airplane in the frames 102 and 102' seems to be suspended, and the airplane is then suddenly moved to the location in the frame 103. To prevent video film from the judder artifact problem, a motion estimation and motion compensation (MEMC) method is therefore applied.

**BRIEF SUMMARY OF THE INVENTION**

The invention provides a video processing apparatus. In one embodiment, the video processing apparatus comprises a decoder, a detector, and a motion estimation and motion compensation (MEMC) module. The decoder decodes video data to generate a series of video frames with time stamps. The detector detects discontinuity of the video frames to generate discontinuity information. The MEMC module selects a previous frame before the discontinuity and a subsequent frame after the discontinuity from the video frames according to the discontinuity information, performs a motion estimation process to determine at least one motion vector between the previous frame and the subsequent frame, performs a motion compensation process according to the motion vector to synthesize an interpolated frame from the previous frame and the subsequent frame, and inserts the interpolated frame into the video frames to obtain a series of compensated frames.

The invention provides a video processing method. In one embodiment, a video processing apparatus comprises a decoder, a detector, and a motion estimation and motion compensation (MEMC) module. First, video data is decoded by the decoder to generate a series of video frames with time stamps. Discontinuity of the video frames is then detected by the detector to generate discontinuity information. A previous frame and a subsequent frame are then selected by the MEMC module from the video frames according to the discontinuity information. A motion estimation process is then performed by the MEMC module to determine at least one motion vector. A motion compensation process is then performed by the MEMC module according to the motion vector to synthesize an interpolated frame from the previous frame and the subsequent frame. The interpolated frame is then inserted by the MEMC module into the video frames to obtain a series of compensated frames.

A detailed description is given in the following embodiments with reference to the accompanying drawings.

## BRIEF DESCRIPTION OF THE DRAWINGS

The invention can be more fully understood by reading the subsequent detailed description and examples with references made to the accompanying drawings, wherein:

Fig. 1 is a schematic diagram of an example of frame repetition;

Fig. 2 is a block diagram of a video processing apparatus according to the invention;

Fig. 3 is a block diagram of a motion estimation and motion compensation (MEMC) module according to the invention;

Fig. 4A is a block diagram of an embodiment of a motion estimation module according to the invention;

Fig. 4B is a diagram of a motion estimation process according to the invention;

Fig. 5A is a block diagram of a motion compensation module according to the invention;

Fig. 5B is a schematic diagram of an example of a pixel interpolation process according to the invention;

Fig. 6A is a schematic diagram of generation of an interpolated frame according to an MEMC process to eliminate discontinuities;

Fig. 6B is a schematic diagram of generation of multiple interpolated frames according to an MEMC process to increase a frame rate;

Fig. 7 is a diagram of an embodiment of an MEMC interpolation process applied to frames with a random sampling time;

Fig. 8 is a diagram of an embodiment of an MEMC interpolation process applied to frames with a non-constant frame rate; and

Fig. 9 is a diagram of comparisons between applications of a conventional frame repetition method and an MEMC method of the invention.

## DETAILED DESCRIPTION OF THE INVENTION

The following description is of the best-contemplated mode of carrying out the  invention. This description is made for the purpose of illustrating the general principles of the invention and should not be taken in a limiting sense. The scope of the invention is best determined by reference to the appended claims.

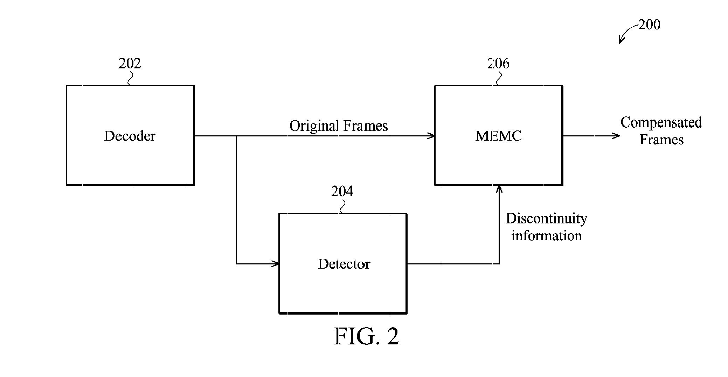

Referring to Fig. 2, a block diagram of a video processing apparatus 200 according to the invention is shown. In one embodiment, the video processing apparatus 200 comprises a decoder 202, a detector 204, and a motion estimation and motion compensation (MEMC) module 206. The decoder 202 decodes compressed video data to obtain a series of video frames. The video frames are then sent to the detector 204 and the MEMC module 206. The detector 204 detects discontinuities of the video frames to generate discontinuity information. The MEMC module 206 then uses motion estimation and motion compensation methodology to generate interpolated frames, and inserts the interpolated frames between the video frames according to the discontinuity information so as to obtain a series of compensated frames. The video processing apparatus 200 can then sequentially display the compensated frames on a screen.

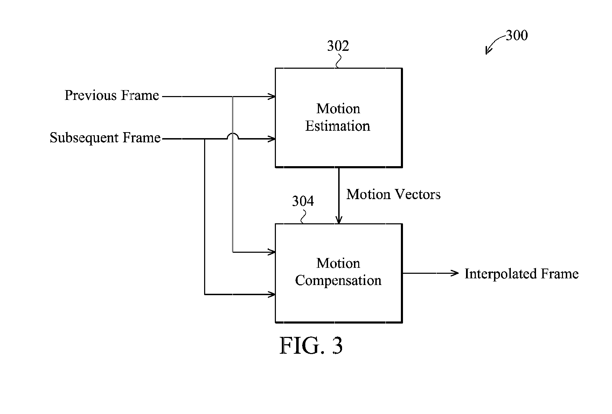

Referring to Fig. 3, a block diagram of a motion estimation and motion compensation (MEMC) module 300 according to the invention is shown. In one embodiment, the MEMC module 300 comprises a motion estimation module 302 and a motion compensation module 304. When discontinuity information indicates that a discontinuity has occurred in the video frames, the MEMC module 300 selects a previous frame prior to the discontinuity of the video frames and a subsequent frame after the discontinuity of the video frames. The motion estimation module 302 then performs a motion estimation process to determine at least one motion vector among the previous frame and the subsequent frame. The motion compensation module 304 then performs a motion compensation process according to the motion vector to synthesize an interpolated frame from the previous frame and the subsequent frame. The MEMC module 300 then inserts the interpolated frame into the video frames to obtain a series of compensated frames without discontinuities.

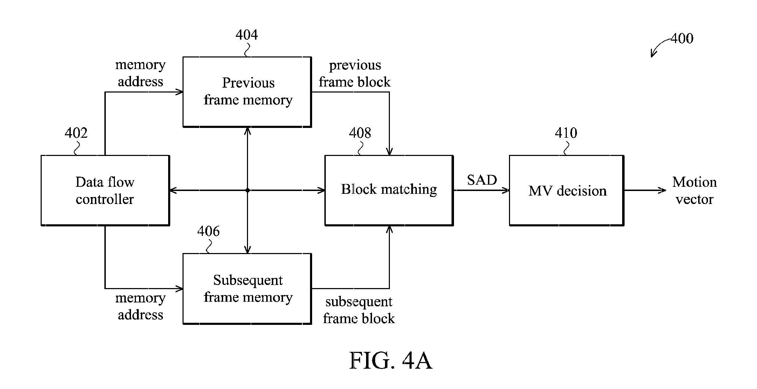

Referring to Fig. 4A, a block diagram of an embodiment of a motion estimation module 400 according to the invention is shown. In one embodiment, the motion estimation module 400 comprises a data flow controller 402, a previous frame memory 404, a subsequent frame memory 406, a block matching module 408, and a motion vector decision module 410. A previous frame is stored in the previous frame memory 404, and a subsequent frame is stored in the subsequent frame memory 406. The data flow controller 402 selects a first candidate block from a plurality of blocks of the previous frame, and sends the memory address of the first candidate block to the previous frame memory 404. The previous frame memory 404, according to the memory address of the first candidate block, outputs the first candidate block. The first candidate block then is sent to the block matching module 408. Similarly, the data flow controller 402 selects a second candidate block from a plurality of blocks of the subsequent frame, and sends the memory address of the second candidate block to the subsequent frame memory 406. The subsequent frame memory 406, according to the memory address of the second candidate block, outputs the second candidate block. The second candidate block then is sent to the block matching module 408. In this embodiment, the disclosed two memories for storing previous frame and subsequent frame respectively is not intend to limit the scope of the invention thereto since many other possible configuration may be employed by the skilled artisan according to the present embodiment.

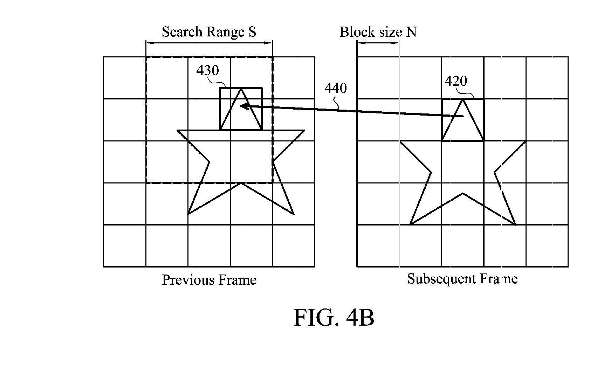

The block matching unit 408 calculates a sum of absolute difference (SAD) between the pixels of the first candidate block and the second candidate block. The SAD value indicates a difference level between the first candidate block and the second candidate block and is sent to the motion vector decision module 410. After all blocks of a candidate area of the previous frame are compared with all blocks of a candidate area of the subsequent frame, the motion estimation decision module 410 can determine matched blocks with a minimum SAD, and can calculate a motion vector between the two matched blocks. Referring to Fig. 4B, a diagram of a motion estimation process according to the invention is shown. The pixels of a block 420 in the subsequent frame is determined to match the pixels of a block 430 in the previous frame, and a motion vector 440 between the matched blocks 420 and 430 is calculated.

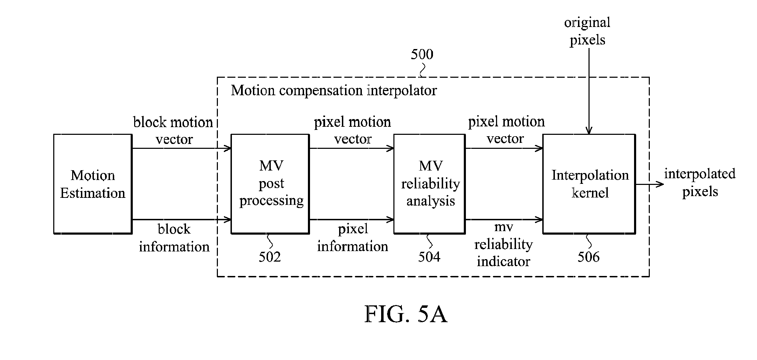

Referring to Fig. 5A, a block diagram of a motion compensation module 500 according to the invention is shown. In one embodiment, the motion compensation module 500 comprises an MV post processing module 502, an MV reliability analysis module 504, and an interpolation kernel 506. A motion estimation module sends a block motion vector and block information to the MV post processing module 502. The MV post processing module 502 then derives a pixel motion vector and pixel information from the block motion vector and the block information. The MV reliability analysis module 504 receives the pixel motion vector and the pixel information, and generates a motion vector reliability indicator. The MV reliability analysis module 504 then sends the received pixel motion vector and the motion vector reliability indicator to the interpolation kernel 506. The interpolation kernel 506 then accesses the originals pixels according to the pixel motion vector. And the interpolation kernel 506 performs interpolation operation to those original pixels to generate interpolated pixels according to the motion vector reliability indicator.

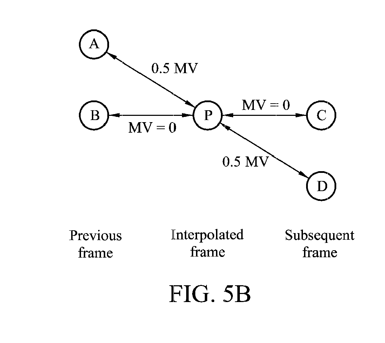

Referring to Fig. 5B, a schematic diagram of an example of a pixel interpolation process according to the invention is shown. To generate an interpolated pixel P of an interpolated frame, two pixels A and B are fetched from a previous frame, and two pixels C and D are fetched from a subsequent frame. A stationary average value STA corresponding to a non-motion-compensated interpolation process is then calculated by averaging the sum of the pixels B and C, and a motion compensation average value MCA corresponding to motion-compensated interpolation process is then calculated by averaging the sum of the pixels A and D. A unreliable indication value URI is then used as a blending factor to mix the value MCA with the value STA to obtain the interpolated pixel value according to the following algorithm:

$$MIX = (1-\alpha) \times MCA + \alpha \times STA,$$

wherein MIX is the interpolated pixel value, and the blending factor $\alpha$ is in proportional to the URI value.

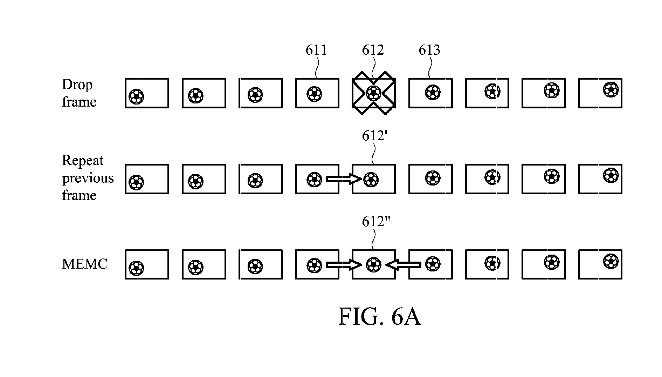

Referring to Fig. 6A, a schematic diagram of generation of an interpolated frame according to an MEMC process to eliminate discontinuities is shown. A discontinuity 612 is detected in a series of video frames. The discontinuity may be induced by decoding errors. A previous frame 611 prior to the discontinuity 612 and a subsequent frame 613 subsequent to the discontinuity 612 are then selected from the video frames. An interpolated frame 612" is then generated according to an MEMC process. In comparison with the frame 612' generated by duplicating the previous frame 611, the interpolated frame 612" indicates a precise location of a ball. The interpolated frame 612" is inserted as the frames having discontinuity to obtain compensated frames without discontinuities, such that the judder artifact problem does not occur in the compensated frames.

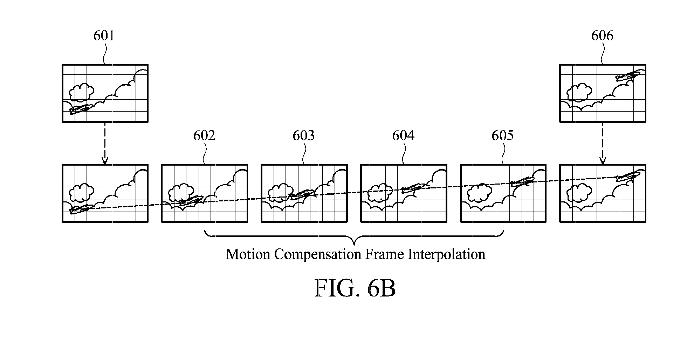

Referring to Fig. 6B, a schematic diagram of generation of multiple interpolated frames according to an MEMC process to increase a frame rate is shown. A video film with a frame rate of 20Hz comprises two frames 601 and 606. Next, an MEMC process is then used to generate four interpolated frames 602, 603, 604, and 605 according to the frames 601 and 606. The interpolated frames 602, 603, 604, and 605 are then inserted between the frames 601 and 606 to generate a film with a frame rate of 60 Hz. In comparison with the example of the frame repetition technique shown in Fig. 1, the film compensated according to the MEMC process has no judder artifact problems.

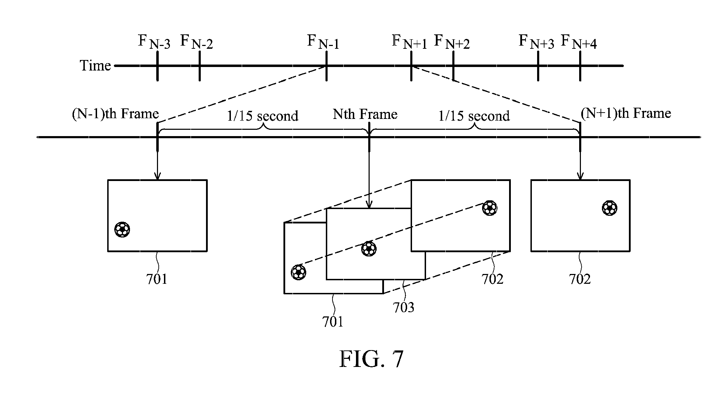

Referring to Fig. 7, a diagram illustrates an embodiment of an MEMC interpolation process applied to video frames with a random sampling time. A series of video frames $F_{N-3}$, $F_{N-2}$, $F_{N-1}$, $F_{N+1}$, $F_{N+2}$, $F_{N+3}$, and $F_{N+4}$ have random time stamps. In other words, the intervals between the time stamps of the video frames $F_{N-3} \sim F_{N+4}$ are random. In one embodiment, the video frames $F_{N-3} \sim F_{N+4}$ are a series of pictures photographed with a camera. To generate a series of compensated frames with a required frame rate, the detector 204 calculates time stamps of the compensated frames according to the required frame rate, and compares the time stamps of the compensated frames with the time stamps of the video frames $F_{N-3} \sim F_{N+4}$ to generate the discontinuity information. The MEMC module 206 then synthesizes a series of interpolated frames according to the discontinuity information and the video frames, and then inserts the interpolated frames into the video frames $F_{N-3} \sim F_{N+4}$ to obtain the compensated frames with the required frame rate. For example, the MEMC module 206 generates an interpolated frame $F_N$ according to the frames $F_{N-1}$ and $F_{N+1}$, and then inserts the interpolated frame $F_N$ between the frames $F_{N-1}$ and $F_{N+1}$.

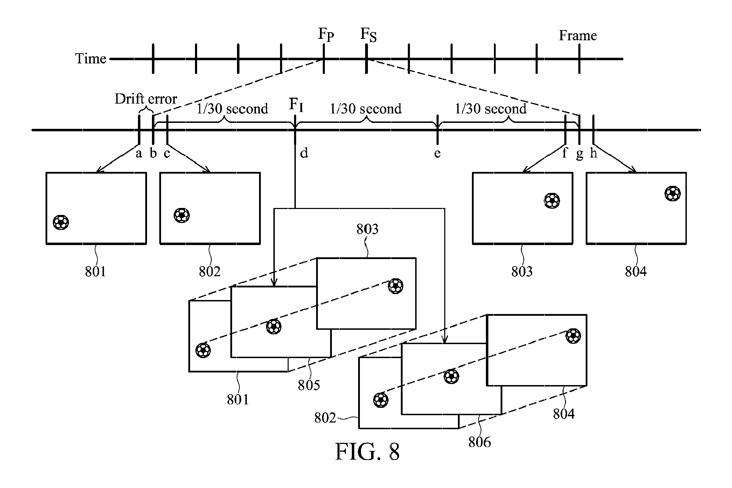

Referring to Fig. 8, a diagram depicts an embodiment of an MEMC interpolation process applied to video frames with a non-constant frame rate. The frame rate of a series of video frames is not precisely constant. Although the video frames have a rough frame rate, e.g. 10 Hz, the interval between the frames $F_P$ and $F_S$ is not exactly 1/10 second. For example, the time stamp of the frame $F_P$ may not be exactly at the time b, which is a time stamp corresponding to a constant frame rate, and the time stamp of frame $F_P$ may be at the time "a" or "c" with a drift error from time "a". Similarly, the actual time stamp of the frame $F_S$ may not be exactly at the time "g", which is a time stamp corresponding to the constant frame rate, and the actual time stamp of frame $F_S$ may be at the time "f" or "h" with a drift error from time "g". When the MEMC module 206 generates an interpolated frame $F_I$ according to the video frames $F_P$ and $F_S$ with drift error, the content of the interpolated frame $F_I$ may be affected by the drift error of the video frames $F_P$ and $F_S$. For example, an interpolated frame $F_I$ derived from the frame 801 with a time stamp at time "a" and the frame 803 with a time stamp at time f has a content of frame 805. An interpolated frame $F_I$ derived from the frame 802 with a time stamp at time c and the frame 804 with a time stamp at time h has a content of frame 806. And the content of frame 805 should be different from the content of frame 806.

To deal with the effect introduced by a drift error of reference frames in generation of an interpolated frame, the MEMC module 206 may synthesize the interpolated frame $F_I$ from the previous frame $F_P$ and the subsequent frame $F_S$ according to the following algorithm:

$$Z = [X \times (Ts\text{-}Td)/(Ts\text{-}Tp)] + [Y \times (Td\text{-}Tp)/(Ts\text{-}Tp)],$$

wherein Z is the content of the interpolated frame $F_I$, X is the content of the previous frame $F_P$, Y is the content of the subsequent frame $F_S$, "Tp" represents the time stamp of the previous frame $F_P$, Td represents the time stamp of the interpolated frame $F_I$, and Ts represents the time stamp of the subsequent frame $F_S$.

In addition, to deal with the effect introduced by a drift error of reference frames in generation of an interpolated frame, the MEMC module 206 may determines a first motion vector V1 indicating displacement from the previous frame $F_P$ to the interpolated frame $F_I$ and a second motion vector V2 indicating displacement from the interpolated frame $F_I$ to the subsequent frame $F_S$ according to the following algorithm:

$$V1 = V \times (Td\text{-}Tp)/(Ts\text{-}Tp);$$

and

$$V2 = V \times (Ts\text{-}Td)/(Ts\text{-}Tp),$$

wherein V is the motion vector from the previous frame $F_P$ to the subsequent frame $F_S$, Tp is the time stamp of the previous frame $F_P$, Td is the time stamp of the interpolated frame $F_I$, and Ts is the time stamp of the subsequent frame $F_S$.

The MEMC method can also be applied to compensation of on-screen-display (OSD) images of a Flash user interface. When a Flash user interface is executed in a computer, a series of OSD images of the Flash user interface are sequentially displayed on a screen according to user inputs. If the frame number of OSD images is not large enough, a judder artifact problem also occurs when the Flash user interface is executed. To solve the judder artifact problem of the Flash user interface, a plurality of interpolated images are generated by the MEMC method according to the invention, and are then inserted between the OSD images of the Flash user interface when the Flash user interface is executed.

The MEMC method can also be applied to compensation of video conference frames of Internet phones such as Skype. When a Voice over Internet Protocol (VoIP) phone is used to build a video conference, since a network bandwidth of the VoIP phone is not high enough or a frame rate of the video conference is low, the judder artifact problem is induced. To solve the judder artifact problem of a video conference, a plurality of interpolated images are generated by the MEMC method according to the invention, and are then inserted between the video frames of the video conference for smooth display when the video conference proceeds. Similarly, the MEMC method can also be applied to compensation of playback frames of a digital television system.

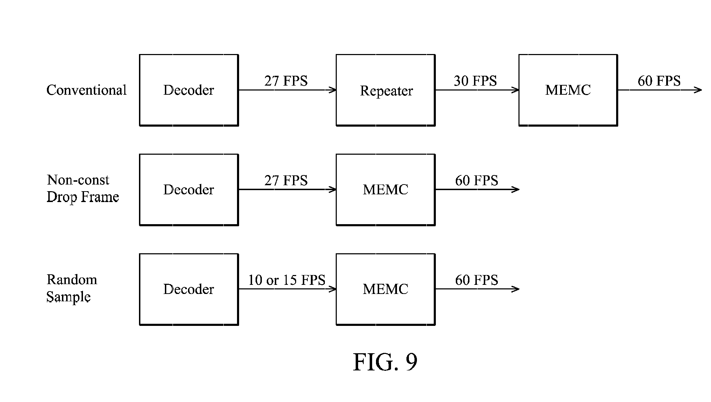

Referring to Fig. 9, a diagram shows comparisons between applications of a conventional frame repetition method and an MEMC method of the invention. A decoder generates video frames at a frame rate of 30 frames per second (FPS). Due to decoding errors, the decoder may generate video frames less than 30 FPS, for example at a frame rate of 27 FPS with discontinuities. According to a conventional frame repetition method, a repeater duplicates previous frames of the discontinuity of the video frames so as to compensate the video frames. The discontinuity is therefore removed, and the frame rate of the compensated frames is increased to 30 FPS. An MEMC module further generates interpolated frames to increase the frame rate of the video frames from 30 FPS to 60 FPS. The judder artifact problem, however, occurs when the duplicated frames are displayed.

According to an MEMC method of the invention, an MEMC module generates interpolated frames according to the MEMC method and then inserts the interpolated frames between the video frames. The discontinuity is therefore removed, and the frame rate of the compensated frames is increased from 27 FPS to 30 FPS. The MEMC module further generates interpolated frames to increase the frame rate of the video frames from 30 FPS to 60 FPS. No judder artifact problems occur when the video frames are displayed. Similarly, when the decoder generates images at a random frame rate such as 10 FPS or 15 FPS, the MEMC module according to the invention can also generates interpolated frames according to the MEMC method to increase the frame rate of the video frames to 60 FPS.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

**Claims**

1.    A video processing apparatus (200), comprising:

a decoder (202), decoding video data to generate a series of video frames with time stamps;
a detector (204), detecting discontinuity of the video frames to generate discontinuity information; and
a motion estimation and motion compensation (MEMC) module (206), selecting a previous frame prior to the discontinuity and a subsequent frame after the discontinuity from the video frames according to the discontinuity information, performing a motion estimation process to determine at least one motion vector, performing a motion compensation process according to the motion vector to synthesize an interpolated frame from the previous frame and the subsequent frame, and inserting the interpolated frame into the video frames to obtain a series of compensated frames.

2.    The video processing apparatus as claimed in claim 1, wherein the MEMC module comprises:

a motion estimation module (302), performing the motion estimation process to determine the motion vector between the previous frame and the subsequent frame; and
a motion compensation module (304), performing the motion compensation process according to the motion vector to synthesize the interpolated frame from the previous frame and the subsequent frame.

3.    The video processing apparatus as claimed in claim 1 or 2, wherein the detector calculates time stamps of the compensated frames according to a required frame rate and compares the time stamps of the compensated frames and the time stamps of the video frames to generate the discontinuity information, the MEMC module synthesizes the interpolated frames according to the discontinuity information and the video frames, and the MEMC module inserts the interpolated frames into the video frames to obtain the compensated frames with the required frame rate.

4.    The video processing apparatus as claimed in any of the claims 1 to 3, wherein the interpolated frame is synthesized from the previous frame and the subsequent frame in accordance with the time stamp of the previous frame, the time stamp of the subsequent frame and the time stamp of the interpolated frame.

5.    The video processing apparatus as claimed in any of the claims 1 to 4, wherein the MEMC module determines a first motion vector indicating displacement from the previous frame to the interpolated frame and a second motion vector indicating displacement from the interpolated frame to the subsequent frame as references for the motion composition process according to the time stamp of the previous frame, the time stamp of the subsequent frame and the time stamp of the interpolated frame.

6.    The video processing apparatus as claimed in any of the claims 1 to 5, wherein the video frames are a series of on-screen-display (OSD) images of a Flash user interface, and the video processing apparatus generates the compensated frames according to the OSD images for smooth display.

7.    The video processing apparatus as claimed in any of the claims 1 to 6, wherein the video frames are frames of a video conference or video call, and the video processing apparatus generates the compensated frames with an increased frame rate for smooth display.

8. The video processing apparatus as claimed in any of the claims 1 to 7, wherein the video frames are playback frames of a digital television system, and the video processing apparatus generates the compensated frames with an increased frame rate for smooth display.

9. A video processing method, wherein a video processing apparatus comprises a decoder, a detector, and a motion estimation and motion compensation (MEMC) module, comprising:

decoding video data by the decoder to generate a series of video frames with time stamps;
detecting discontinuity of the video frames by the detector to generate discontinuity information;
selecting a previous frame prior to the discontinuity and a subsequent frame after the discontinuity from the video frames by the MEMC module according to the discontinuity information;
performing a motion estimation process by the MEMC module to determine at least one motion vector;
performing a motion compensation process by the MEMC module according to the motion vector to synthesize an interpolated frame from the previous frame and the subsequent frame; and
inserting the interpolated frame by the MEMC module into the video frames to obtain a series of compensated.

10. The video processing method as claimed in claim 9, wherein the intervals between the time stamps of the video frames are random, and detecting of the discontinuity comprises:

calculating time stamps of the compensated frames by the detector according to a required frame rate; and
comparing the time stamps of the compensated frames and the time stamps of the video frames to generate the discontinuity information,
wherein the interpolated frames are synthesized according to the discontinuity information, and the interpolated frames are inserted into the video frames to obtain the compensated frames with the required frame rate.

11. The video processing method as claimed in claim 9 or 10, wherein the interpolated frame is synthesized from the previous frame and the subsequent frame in accordance with the time stamp of the previous frame, the time stamp of the subsequent frame and the time stamp of the interpolated frame.

12. The video processing method as claimed in any of the claims 9 to 11, wherein the step of performing a motion estimation process further comprises:

determining of a first motion vector indicating displacement from the previous frame to the interpolated frame and a second motion vector indicating displacement from the interpolated frame to the subsequent frame as references for the motion composition process according to the time stamp of the previous frame, the time stamp of the subsequent frame and the time stamp of the interpolated frame.

13. The video processing method as claimed in any of the claims 9 to 12, wherein the video frames are a series of on-screen-display (OSD) images of a Flash user interface, and the compensated frames are generated according to the OSD images for smooth display.

14. The video processing method as claimed in any of the claims 9 to 13, wherein the video frames are frames of a video conference or video call, and the compensated frames are generated with an increased frame rate for smooth display.

15. The video processing apparatus as claimed in any of the claims 9 to 14, wherein the video frames are playback frames of a digital television system, and the video processing apparatus generates the compensated frames with an increased frame rate for smooth display.

FIG. 1 (PRIOR ART)

FIG. 2

FIG. 3

FIG. 4A

FIG. 4B

500

Motion compensation interpolator

original
pixels

Motion
Estimation

block motion
vector

block
information

MV
post
processing

502

pixel motion
vector

pixel
information

MV
reliability
analysis

504

pixel motion
vector

mv
reliability
indicator

Interpolation
kernel

506

interpolated
pixels

FIG. 5A

A

0.5 MV

MV = 0

B ← → P ← → C

MV = 0

0.5 MV

D

Previous        Interpolated        Subsequent
frame              frame                  frame

FIG. 5B

611  612  613

Drop frame

612'

Repeat previous frame

612"

MEMC

FIG. 6A

FIG. 6B

FIG. 7

FIG. 8

FIG. 9

Europäisches
Patentamt

European
Patent Office

Office européen
des brevets

**EUROPEAN SEARCH REPORT**

Application Number

EP 12 18 2160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLUKAYODE ANTHONY OJO ET AL: "ROBUST MOTION-COMPENSATED VIDEO UPCONVERSION", 19971101, vol. 43, no. 4, 1 November 1997 (1997-11-01), pages 1045-1056, XP011008517, * sections 2 and 3.3 *; * abstract * * equations (1), (2) and (5) * | 1-15 | INV. H04N7/26 H04N7/46 H04N7/68 H04N21/4402 H04N7/01 |
| X | US 2008/123743 A1 (DOUNIWA KENICHI [JP] ET AL) 29 May 2008 (2008-05-29) * paragraph [0003] * * paragraph [0027] - paragraph [0035] * * equations 2 and 3 *; figures 2,3,5,6 * paragraph [0019] - paragraph [0027] * | 1-3,5-15 | |
| X | WO 2009/109936 A1 (NXP BV [NL]; BELLERS ERWIN [US]; GURP JACOBUS WILLEM VAN [NL]) 11 September 2009 (2009-09-11) * figures 2,3 * * page 5, line 12 - page 6, line 24 * * page 7, lines 1-12 * * page 8, line 1 - page 9, line 21 * | 1-5,9-12 | TECHNICAL FIELDS SEARCHED (IPC) H04N |
| X | US 2004/252895 A1 (HUR BONG-SOO [KR] ET AL) 16 December 2004 (2004-12-16) * paragraph [0066] - paragraph [0069] * * paragraph [0076] - paragraph [0077] * * paragraph [0088] - paragraph [0089] * * figures 5,7 * | 1-4,8, 10,11,15 | |

-/--

The present search report has been drawn up for all claims

| Place of search | Date of completion of the search | Examiner |
|---|---|---|
| The Hague | 12 November 2012 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 701 386 A1

Europäisches Patentamt
European Patent Office
Office européen des brevets

**EUROPEAN SEARCH REPORT**

Application Number
EP 12 18 2160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 843 587 A1 (ST MICROELECTRONICS SRL [IT]) 10 October 2007 (2007-10-10)<br>* paragraph [0056] - paragraph [0060] *<br>* paragraph [0061] - paragraph [0064] *<br>* claim 1 *<br>* paragraph [0045] - paragraph [0050] *<br>* paragraph [0031] *<br>* paragraph [0025] *<br>* paragraph [0005] - paragraph [0006] *<br>* figures 6,8-11 *<br>----- | 10 | |
| A | EP 1 237 370 A2 (EASTMAN KODAK CO [US]) 4 September 2002 (2002-09-04)<br>* paragraph [0013] - paragraph [0016] *<br>* paragraph [0006] - paragraph [0007] *<br>* paragraph [0026] *<br>----- | 10 | |
| A | EP 2 151 998 A1 (SAMSUNG ELECTRONICS CO LTD [KR]) 10 February 2010 (2010-02-10)<br>* paragraph [0053] - paragraph [0057] *<br>----- | 6,7,13,14 | |
| A | US 2004/046891 A1 (MISHIMA NAO [JP] ET AL) 11 March 2004 (2004-03-11)<br>* paragraph [0327] - paragraph [0336] *<br>----- | 6,7,13,14 | TECHNICAL FIELDS SEARCHED (IPC) |
| X | SEUNG-HO PARK ET AL: "Advanced local fallback processing for motion-compensated frame rate up-conversion", CONSUMER ELECTRONICS (ICCE), 2012 IEEE INTERNATIONAL CONFERENCE ON, IEEE, 13 January 2012 (2012-01-13), pages 467-468, XP032124828, DOI: 10.1109/ICCE.2012.6161801 ISBN: 978-1-4577-0230-3<br>* the whole document *<br>----- | 1-15 | |

-/--

The present search report has been drawn up for all claims

| Place of search | Date of completion of the search | Examiner |
|---|---|---|
| The Hague | 12 November 2012 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21

Europäisches
Patentamt

European
Patent Office

Office européen
des brevets

# EUROPEAN SEARCH REPORT

Application Number

EP 12 18 2160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEE S-H ET AL: "Adaptive motion-compensated frame rate up-conversion", ELECTRONICS LETTERS, IEE STEVENAGE, GB, vol. 38, no. 10, 9 May 2002 (2002-05-09), pages 451-452, XP006018213, ISSN: 0013-5194, DOI: 10.1049/EL:20020306 * the whole document * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 12 November 2012 | Ferré, Pierre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 12 18 2160

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2012

| Patent document cited in search report | | Publication date | Patent family member(s) | | Publication date |
|---|---|---|---|---|---|
| US 2008123743 | A1 | 29-05-2008 | CN | 101193201 A | 04-06-2008 |
| | | | JP | 2008135980 A | 12-06-2008 |
| | | | US | 2008123743 A1 | 29-05-2008 |
| WO 2009109936 | A1 | 11-09-2009 | NONE | | |
| US 2004252895 | A1 | 16-12-2004 | JP | 2005012797 A | 13-01-2005 |
| | | | KR | 20040108046 A | 23-12-2004 |
| | | | US | 2004252895 A1 | 16-12-2004 |
| EP 1843587 | A1 | 10-10-2007 | EP | 1843587 A1 | 10-10-2007 |
| | | | US | 2007268965 A1 | 22-11-2007 |
| EP 1237370 | A2 | 04-09-2002 | DE | 60211978 T2 | 18-01-2007 |
| | | | EP | 1237370 A2 | 04-09-2002 |
| | | | JP | 2002359778 A | 13-12-2002 |
| | | | US | 2003016750 A1 | 23-01-2003 |
| EP 2151998 | A1 | 10-02-2010 | EP | 2151998 A1 | 10-02-2010 |
| | | | KR | 20100016741 A | 16-02-2010 |
| | | | US | 2010033626 A1 | 11-02-2010 |
| US 2004046891 | A1 | 11-03-2004 | JP | 4198550 B2 | 17-12-2008 |
| | | | JP | 2004159294 A | 03-06-2004 |
| | | | US | 2004046891 A1 | 11-03-2004 |
| | | | US | 2006256238 A1 | 16-11-2006 |

EPO FORM P0459

For more details about this annex : see Official Journal of the European Patent Office, No. 12/82